(19) Europäisches Patentamt / European Patent Office / Office européen des brevets

(11) **EP 2 676 061 B1**

(12) **FASCICULE DE BREVET EUROPEEN**

(45) Date de publication et mention
de la délivrance du brevet:
**12.04.2017   Bulletin 2017/15**

(51) Int Cl.:
*F16L 11/08* (2006.01)          *F16L 33/01* (2006.01)
*F16L 11/10* (2006.01)          *G01M 3/28* (2006.01)

(21) Numéro de dépôt: **12704799.1**

(22) Date de dépôt: **17.02.2012**

(86) Numéro de dépôt international:
**PCT/EP2012/052774**

(87) Numéro de publication internationale:
**WO 2012/110637 (23.08.2012 Gazette 2012/34)**

(54) **CONDUITE TUBULAIRE FLEXIBLE POUR LE TRANSPORT D'UN FLUIDE PÉTROLIER TEL QU'UN FLUIDE POLYPHASIQUE OU UN GAZ.**

FLEXIBLE RÖHRENFÖRMIGE LEITUNG ZUM TRANSPORT EINES ERDÖLFLUIDUMS, EINES MEHRPHASIGEN FLUIDUMS ODER EINES GASES

FLEXIBLE TUBULAR PIPE FOR TRANSPORTING A PETROLEUM FLUID SUCH AS A MULTIPHASE FLUID OR A GAS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **18.02.2011   FR 1151360**

(43) Date de publication de la demande:
**25.12.2013   Bulletin 2013/52**

(73) Titulaire: **Technip France
92400 Courbevoie (FR)**

(72) Inventeurs:
• **DEMANZE, Frédéric
F-76490 Caudebec En Caux (FR)**
• **FELIX-HENRY, Antoine
F-76000 Rouen (FR)**
• **EPSZTEIN, Thomas
F-52130 Voillecomte (FR)**

• **JUNG, Patrice
F- 76940 LA Mailleraye Sur Seine (FR)**
• **BOURGET, Jean-Christophe
F-76230 Bois-Guillaume (FR)**
• **IZARN, Cécile
F-76000 Rouen (FR)**

(74) Mandataire: **Lavoix
2, place d'Estienne d'Orves
75441 Paris Cedex 09 (FR)**

(56) Documents cités:
EP-A1- 0 695 902          EP-A1- 0 874 185
EP-A1- 1 939 510          WO-A1-91/02232
WO-A2-2009/132365          DE-A1- 3 516 795
DE-A1- 19 601 652          DE-B3-102004 002 324
GB-A- 2 099 952

**Description**

La présente invention concerne une conduite flexible pour le transport d'un fluide pétrolier tel qu'un fluide polyphasique ou un gaz. Elle concerne plus particulièrement une conduite flexible de type non lié (« unbonded » en anglais) pour le transport d'hydrocarbures gazeux ou biphasiques comportant une phase gazeuse.

L'invention se rapporte également à une méthode de test d'étanchéité d'un espace intercouche entre deux gaines d'une telle conduite tubulaire flexible.

Ces conduites flexibles, qui sont formées d'un ensemble de différentes couches concentriques et superposées, sont dites de type non lié dès lors que ces couches présentent une certaine liberté de se déplacer les unes par rapport aux autres. Ces conduites flexibles satisfont, entre autres, aux recommandations des documents normatifs API 17J « Spécification for Unbounded Flexible Pipe » et API RP 17B « Recommended Practice for Flexible Pipe » établis par l'American Petroleum Institute.

Les conduites tubulaires flexibles comportent, à chaque extrémité, un embout de connexion destiné à assurer le raccordement des conduites entre-elles ou avec des équipements terminaux et ces embouts doivent être réalisés dans des conditions assurant à la fois une bonne solidarisation et une bonne étanchéité.

Les couches constitutives comprennent notamment des gaines polymériques assurant généralement une fonction d'étanchéité, et des couches de renfort destinées à la reprise des efforts mécaniques et formées par des enroulements de feuillards, de fils métalliques, de bandes diverses ou de profilés en matériaux composites.

Les conduites flexibles de type non lié les plus utilisées dans l'industrie pétrolière off-shore comprennent généralement, de l'intérieur vers l'extérieur, une carcasse interne constituée d'un feuillard agrafé qui sert à empêcher l'écrasement de la conduite sous l'effet de la pression externe, au moins une gaine d'étanchéité polymérique, une voûte de pression constituée d'au moins un fil métallique de forme agrafé et enroulé hélicoïdalement à pas court, ladite voûte de pression servant à reprendre les efforts radiaux liés à la pression interne, des nappes d'armures de traction formées d'enroulements hélicoïdaux à pas long de fils métalliques composites, lesdites nappes d'armures étant destinées à reprendre les efforts longitudinaux que subit la conduite, et enfin une gaine externe d'étanchéité destinée à protéger de l'eau de mer les couches de renfort.

Lorsque la conduite est destinée à véhiculer des hydrocarbures à haute température, typiquement entre 100°C et 130°C, la gaine d'étanchéité polymérique, encore appelée gaine de pression, est généralement réalisée par extrusion d'un polymère à base de PVDF (« polyvinylidene fluoride » en anglais). Ce type de polymère présente cependant l'inconvénient d'être peu ductile à basse température si bien qu'il est nécessaire de s'assurer que la gaine de pression présente un bon état de surface afin d'éviter le phénomène de rupture en fatigue sous l'effet de variations de courbure. C'est la raison pour laquelle dans certaines applications dynamiques une deuxième gaine polymérique dite gaine sacrificielle est interposée entre la carcasse interne et la gaine de pression afin de préserver cette gaine de pression des aspérités de la carcasse interne. De la sorte, si une fissure s'initie à l'interface entre la gaine sacrificielle et la carcasse interne, puis se propage jusqu'à traverser de part en part la gaine sacrificielle, elle est stoppée par l'interface entre la gaine sacrificielle et la gaine de pression, si bien que la gaine de pression est protégée.

Un problème découlant du transport de fluides pétroliers à température et pression élevées est lié à la perméabilité des gaines polymériques. En effet, la diffusion du gaz à travers les thermoplastiques utilisés pour réaliser les gaines d'étanchéité augmente avec la température et la pression.

Ainsi, lors du transport de ce type de fluides à forte pression et à haute température, les composés acides tels que l'hydrogène sulfuré $H_2S$ et le dioxyde de carbone $CO_2$, ainsi que la vapeur d'eau ont tendance à migrer à travers les gaines polymériques jusqu'à atteindre les parties métalliques de la conduite et risquer de provoquer des phénomènes de corrosion et de fragilisation par l'hydrogène. Ces phénomènes de corrosion et de fragilisation des parties métalliques peuvent affecter l'intégrité mécanique de la conduite qui est fortement sollicitée par les hautes pressions du fluide pétrolier transporté et par l'environnement marin. C'est pourquoi, les couches métalliques sont alors réalisées avec des aciers spéciaux résistant à la corrosion, mais de tels aciers présentent les inconvénients d'être coûteux ou de présenter des caractéristiques mécaniques médiocres, ce qui impose d'augmenter la section et le poids des parties métalliques.

Par ailleurs, lors du transport de fluides polyphasiques, la diffusion des gaz à travers les gaines polymériques provoque une augmentation de la pression autour de ces gaines. Lorsque cette pression devient supérieure à la pression interne régnant dans la conduite, comme par exemple lors d'une décompression suite à un arrêt de production, la différence de pression peut conduire à l'effondrement de la carcasse interne. Ce phénomène de diffusion concerne non seulement les gaz précités, à savoir l'$H_2S$, le $CO_2$ et la vapeur d'eau, mais aussi le méthane $CH_4$ qui est généralement présent en forte proportion et sous haute pression dans les hydrocarbures transportés, et dont la diffusion peut de ce fait générer des problèmes mécaniques significatifs.

Une solution pour éviter l'affaissement de la carcasse interne consiste à augmenter l'épaisseur du feuillard constituant cette carcasse.

Mais ce surdimensionnement est onéreux et a surtout pour inconvénient d'augmenter le poids de la conduite. Un exemple connu est divulgué par le document GB2099952.

Pour éviter les effets corrosifs des composés acides tels $H_2S$ et/ou $CO_2$, il est connu par exemple dans les documents EP 844429 et WO 2009/153451, d'introduire dans une gaine polymérique des produits chimiquement actifs auxdits composés acides de manière à les neutraliser. Ces produits chimiquement actifs peuvent être introduits dans la gaine sous forme de particules ou déposés en surface.

Mais, l'incorporation de ce type de produit dans les gaines polymériques augmente le coût de fabrication des conduites flexibles équipées de ces gaines.

L'invention a pour objectif de remédier aux inconvénients précités des structures de l'art antérieur en proposant une conduite tubulaire flexible utilisable pour transporter sous forte pression et haute température des fluides pétroliers polyphasiques ou des gaz.

L'invention a donc pour objet une conduite tubulaire flexible pour le transport d'un fluide pétrolier tel qu'un fluide polyphasique ou un gaz, ladite conduite étant du type non lié et comportant, d'une part, notamment une première et une seconde gaines polymériques, au moins une nappe d'armures de traction et une gaine polymérique d'étanchéité externe et, d'autre part, à chacune de ses extrémités, un embout de connexion comprenant, entre autres, une voûte d'extrémité et une canule partiellement insérée entre les extrémités libres des deux gaines polymériques et coopérant avec des moyens de sertissage assurant une fonction d'étanchéité entre d'une part l'extrémité libre de la seconde gaine et d'autre part la voûte d'extrémité, caractérisée en ce que la canule d'un premier embout de connexion comporte des moyens de drainage des gaz de l'interstice entre les deux gaines vers l'extérieur de la conduite et la canule du second embout de connexion comporte des moyens de drainage des gaz de l'interstice entre les deux gaines vers l'extérieur de la conduite ou vers l'intérieur de ladite conduite.

Les gaz présents dans l'interstice entre la première gaine et la deuxième gaine sont ainsi aptes à être évacués vers l'extérieur de la conduite et/ou vers l'intérieur de la conduite au niveau du volume interne du fluide pétrolier définie par la carcasse interne ou par la première gaine.

La première gaine polymérique constitue avantageusement une gaine sacrificielle. La seconde gaine polymérique constitue avantageusement une gaine d'étanchéité interne ou gaine de pression.

Dans une variante, la première gaine polymérique constitue une gaine de pression et la deuxième gaine polymérique constitue une gaine anti-perméabilité ou écran anti-$H_2S$ sertie au niveau des embouts à chacune des extrémités de la conduite.

La conduite tubulaire flexible selon l'invention peut comprendre l'une ou plusieurs des caractéristiques suivantes, prises isolément ou suivant toute(s) combinaison(s) techniquement possible(s) :

- la conduite comporte une carcasse interne située à l'intérieur des première et seconde gaines polymériques et une voûte de pression entre la seconde gaine polymérique et ladite au moins une nappe d'armures,

- l'embout muni de la canule comportant des moyens de drainage des gaz vers l'extérieur comprend des moyens de sertissage assurant une fonction d'étanchéité entre d'une part la première gaine sur la carcasse interne, et d'autre part la canule correspondante,

- les moyens de drainage des gaz vers l'extérieur comprennent au moins un canal axial ménagé dans l'épaisseur de la canule et s'étendant entre un bord d'extrémité de ladite canule placé dans l'interstice entre les deux gaines et une chambre interne annulaire ménagée entre la canule, la voûte d'extrémité et l'extrémité libre de la seconde gaine,

- les moyens de drainage des gaz vers l'extérieur comprennent plusieurs canaux axiaux décalés les uns des autres dans la circonférence de la canule correspondante,

- la chambre annulaire communique avec l'extérieur par un passage traversant la voûte d'extrémité et comportant un orifice d'entrée débouchant dans ladite chambre et un orifice de sortie débouchant à l'extérieur de la conduite,

- l'orifice de sortie du passage est équipé d'une soupape différentielle,

- l'orifice de sortie du passage est raccordé à un système de mesure de la pression différentielle des gaz entre l'orifice de sortie du passage et l'intérieur de la conduite et/ou à un système d'analyse des gaz,

- l'orifice de sortie du passage est raccordé à un système de mesure de la température des gaz et/ou du débit des gaz,

- les moyens de drainage des gaz vers l'intérieur de la conduite comportent au moins un canal axial ménagé dans l'épaisseur de la canule et s'étendant entre les deux bords des extrémités de ladite canule, et

- les moyens de drainage des gaz vers l'intérieur de la conduite comprennent plusieurs canaux axiaux décalés les uns des autres dans la circonférence de la canule correspondante.

Une fois la fabrication de la conduite terminée et avant qu'elle soit acheminée et mise en service sur un site d'extraction d'hydrocarbures, un test de réception (« FAT » pour Factory Acceptance Test) décrit dans les documents normatifs API 17J et API RP 17B est avantageusement réalisé afin de vérifier l'étanchéité de la gaine de pression et d'en garantir l'intégrité ainsi que la bonne tenue du sertissage de celle-ci au niveau de chacune des deux extrémités de la conduite, destinées à être emmanchées et serties dans un embout.

Actuellement, ledit test « FAT » ne permet de tester que l'intégrité de la gaine de pression, ce qui est restrictif dès lors que la conduite tubulaire flexible comprend des espaces dits intercouches, entre deux gaines polymériques et dont on souhaiterait tester l'étanchéité afin de garantir une efficacité optimale de la conduite. Cependant, tester l'étanchéité de chaque espace intercouche peut présenter un risque pour la conduite tubulaire flexible car la mise en pression de ces espaces intercouches n'est pas anodine et peut entraîner un risque d'effondrement de la carcasse interne.

L'invention se rapporte également à une méthode de test d'étanchéité d'un espace intercouche d'une conduite tubulaire flexible notamment telle que définie plus haut, comprenant les étapes de :

a) mise en pression d'un volume intérieur ($V_i$) de transport de fluide, à une première pression ($P_i$) ;
b) stabilisation de la pression ($P_i$) dans le volume intérieur $V_i$ ;
c) mesure de la pression ($P_{ei}$) au sein de l'espace intercouche (ei).

La méthode de test d'étanchéité d'un espace intercouche d'une conduite tubulaire flexible selon l'invention peut comprendre l'une ou plusieurs des étapes suivantes, prises isolément ou suivant toute(s) combinaison(s) techniquement possible(s) :

- elle comporte après l'étape b), une étape $b_1$) de mise en communication fluidique du volume intérieur avec l'espace intercouche, puis une étape $b_2$) de mise en pression du volume intérieur et de l'espace intercouche, à la pression fixée à l'étape a) ;

- elle comprend après l'étape c), une étape de dépressurisation du volume intérieur le volume intérieur et l'espace intercouche étant reliés ensemble ;

- elle comprend, après l'étape c), une étape $e_1$) de dépressurisation de l'espace intercouche par ouverture d'au moins un piquage ;

- elle comprend entre l'étape b) et l'étape c), une étape d) de mesure de la pression au sein du volume intérieur ;

- elle comprend après l'étape d), une étape $d_2$) de dépressurisation du volume intérieur à une pression intermédiaire inférieure à la première pression ;

- elle comporte entre l'étape d) et l'étape c), une étape $f_2$) de mise en pression du volume de l'espace intercouche à une pression supérieure à la pression intermédiaire et inférieure ou égale à la première pression fixée à l'étape a) ;

- elle comporte après l'étape c), une étape $g_2$) de dépressurisation de l'espace intercouche, avantageusement suivie d'une dépressurisation du volume intérieur ;

- le fluide utilisé pour la mise en pression d'au moins un des volumes de la conduite est choisi parmi un gaz et un liquide.

- l'étape c) est réalisée à l'aide d'un système de mesure de pression, notamment d'un capteur de pression

- l'étape d) est réalisée à l'aide d'un système de mesure de pression, notamment d'un capteur de pression.

L'invention sera mieux comprise à la lecture de la description qui va suivre, donnée uniquement à titre d'exemple et faite en se référant aux dessins annexés, sur lesquels :

- la Figure 1 est une vue en perspective et partielle d'une conduite tubulaire flexible pour le transport d'un fluide pétrolier tel qu'un fluide polyphasique ou un gaz,

- la Figure 2 est un schéma d'un premier mode de réalisation d'une conduite tubulaire flexible, conforme à l'invention,

- la Figure 3 est un schéma d'un second mode de réalisation d'une conduite tubulaire flexible, conforme à l'invention,

- la Figure 4 est une demi-vue schématique et partielle en coupe axiale d'un premier mode de réalisation d'un embout de collection d'une conduite tubulaire flexible, conforme à l'invention,

- la Figure 5 est une demi-vue schématique et partielle en coupe axiale d'un second mode de réalisation d'un embout de connexion d'une conduite tubulaire flexible, conforme à l'invention,

- la Figure 6 est un schéma simplifié en coupe axiale d'une première méthode de test FAT d'un espace intercouche d'une conduite tubulaire flexible, conforme à l'invention, et

- la Figure 7 est un schéma d'une seconde méthode de test FAT d'un espace intercouche d'une conduite tubulaire flexible, conforme à l'invention.

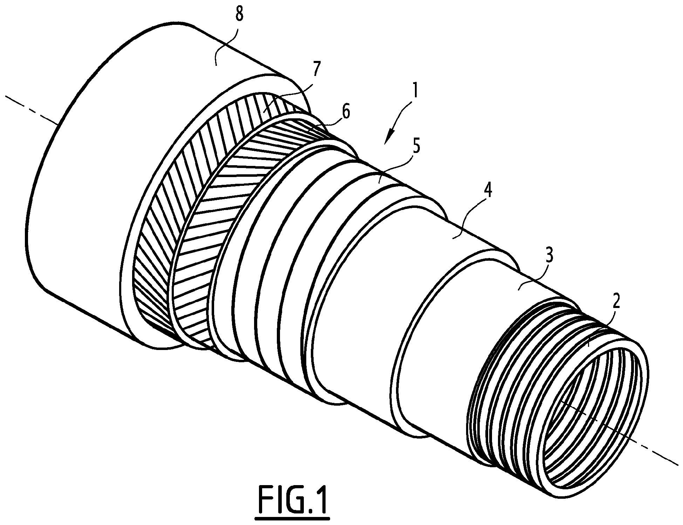

Sur la Figure 1, on a représenté partiellement une conduite tubulaire flexible 1 destinée à l'exploitation pétrolière offshore, et plus particulièrement au transport d'un fluide pétrolier tel qu'un fluide polyphasique ou un gaz contenant de la vapeur d'eau et/ou des composés acides tels l'hydrogène sulfuré et/ou le dioxyde de carbone et/ou du méthane. Elle est du type non liée et répond aux spécifications définies dans les documents normatifs API 17J, API RP 17B.

La conduite tubulaire flexible 1 comprend de l'intérieur vers l'extérieur :

- une carcasse interne 2 constituée d'une bande métallique enroulée, profilée et agrafée selon une hélice à pas court, typiquement avec un angle d'hélice compris entre 70° et 90°, et destinée à la résistance à l'écrasement sous l'effet de la pression externe appliquée à la conduite,

- une première gaine polymérique 3 de faible épaisseur dite « gaine sacrificielle »,
- une seconde gaine polymérique 4 d'étanchéité ou « gaine de pression », lesdites gaines 3 et 4 étant réalisées par extrusion d'un matériau polymère, en général choisi parmi les polyoléfines, les polyamides et les polymères fluorés,
- une voûte de pression 5 réalisée en fil métallique par exemple agrafé enroulé hélicoïdalement à pas court , typiquement avec un angle d'hélice compris entre 70° et 90°, et assurant la résistance à la pression interne dans la conduite 1,
- au moins une nappe d'armures de traction 6 et dans l'exemple de réalisation représenté à la Figure 1, deux nappes croisées d'armures de traction 6 et 7 constituées par des fils métalliques enroulés en hélice à pas long, typiquement selon des angles compris entre 20 et 55°, et
- une gaine d'étanchéité polymérique 8 formant une protection externe de la conduite 1.

Cette conduite 1 est du type non liée (« unbonded » en anglais), c'est-à-dire que les différentes couches composant cette conduite 1 présentent une certaine liberté de se déplacer les unes par rapport aux autres.

La conduite représentée à la Figure 1 est du type « rough-bore », c'est-à-dire que le fluide en circulation dans la conduite 1 est en contact avec la carcasse interne 2, ladite carcasse interne 2 étant la première couche en partant de l'intérieur.

Alternativement, la conduite peut être du type « smooth bore », c'est-à-dire que la conduite 1 ne comporte pas de carcasse interne 2, la première couche en partant de l'intérieur étant dans ce cas une gaine polymérique.

Selon d'autres modes de réalisation, les gaines polymériques 3 et 4 peuvent être intercalées entre la voûte de pression 5 et la nappe d'armures 6 ou encore entre les deux nappes d'armures 6 et 7.

Selon une autre variante, la conduite 1 ne comporte pas de voûte de pression 5 et, dans, ce cas, les nappes d'armures croisées à ± 55° assurent à la fois les fonctions de reprise de la tension et de reprise de la pression interne.

Selon encore une autre variante, les deux gaines polymériques 3 et 4 forment la voûte de pression 5.

La conduite tubulaire flexible 1 comporte, à chacune de ses extrémités, un embout de connexion 10 destiné à assurer le raccordement des conduites entre elles ou avec des équipements terminaux et ces embouts doivent être réalisés dans des conditions assurant à la fois une bonne solidarisation et une bonne étanchéité.

En effet, les embouts de connexion 10 peuvent assurer plusieurs fonctions qui sont notamment l'ancrage des armures de traction 6 et 7 ainsi que le sertissage et l'étanchéité des extrémités libres des différentes gaines polymériques 3, 4 et 8.

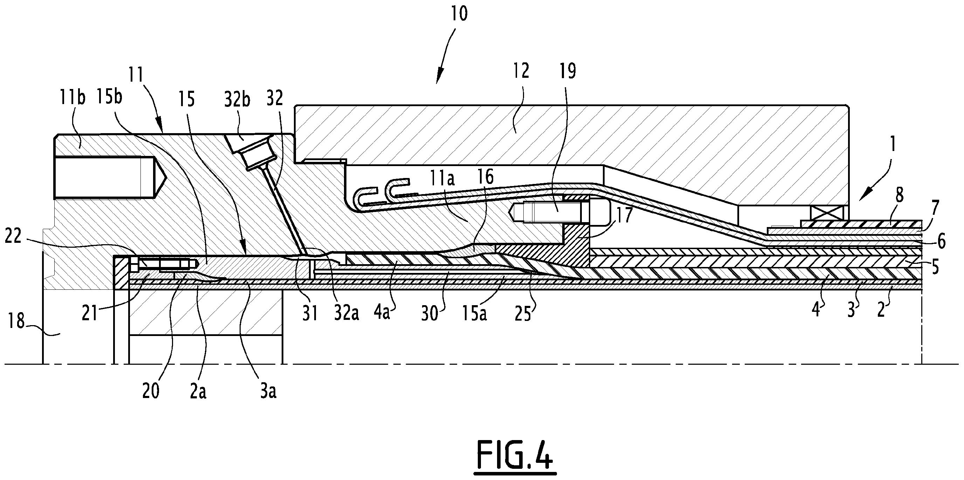

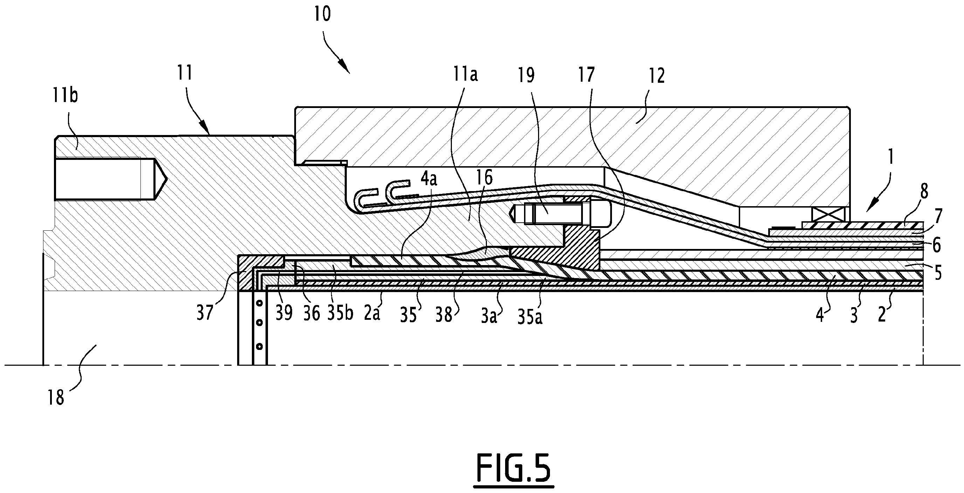

Sur les Figures 4 et 5, on a représenté une extrémité de la conduite tubulaire flexible 1 équipée d'un embout de connexion 10.

Sur ces figures, les éléments communs sont désignés par les mêmes références et seuls les éléments permettant de faciliter la compréhension de l'invention ont été représentés, les autres éléments ayant été supprimés.

D'une manière générale, l'embout 10 comprend une voûte d'extrémité 11 comportant une partie avant 11a destinée à la fixation des armures de traction 6 et 7 par des moyens connus, non représentés, et une partie arrière 11 b destinée à la fixation sur un autre embout de connexion ou à des équipements terminaux. Cette voûte d'extrémité 11 présente un alésage 18 central cylindrique de diamètre interne sensiblement égal au diamètre interne de la carcasse interne 2, et dont la fonction est d'assurer l'écoulement des fluides transportés par la conduite 1. Cet alésage central 18 est disposé à coté de l'extrémité libre 2a de la carcasse interne 2, coaxialement à cette dernière, de façon à assurer un écoulement continu des fluides entre la conduite 1 et l'embout 10.

La partie avant 11 a de la voûte d'extrémité 11 est recouverte d'un capot 12 qui s'étend également au-dessus de l'extrémité libre de la gaine d'étanchéité polymérique 8 et des nappes d'armures de traction 6 et 7.

La voûte 11 s'étend au-dessus des extrémités libres 2a, 3a et 4a, respectivement de la carcasse interne 2, de la première gaine polymérique 3 et de la seconde gaine polymérique 4.

Une canule 15 est partiellement insérée entre les extrémités libres 4a et 3a, respectivement des deux gaines polymériques 4 et 3. Pour cela, la canule 15 comporte une partie avant 15a en forme de coin placée entre l'extrémité libre 4a de la seconde gaine polymérique 4 et la première gaine polymérique 3 et une partie arrière 15b recouvrant l'extrémité libre 3a de la première gaine polymérique 3. La canule 15 est maintenue dans cette position par la paroi interne de la voûte d'extrémité 11.

L'extrémité libre 4a de la seconde gaine 4 est maintenue sur la partie avant 15a de la canule 15 par des moyens 16 de sertissage interposés entre ladite extrémité libre 4a de la seconde gaine 4 et la paroi interne de la partie avant 11a de la voûte 11. Les moyens 16 assurent une fonction d'étanchéité entre d'une part la première gaine 3 et d'autre part la canule 15. De manière classique, ces moyens se présentent avantageusement sous la forme d'un cône 16 bloqué en position de sertissage et d'étanchéité par une bride 17. La bride 17 est fixée sur la partie avant 11 a de la voûte d'extrémité 11 par exemple par des organes de vissage 19. D'autres moyens de sertissage et d'étanchéité pourraient être alternativement utilisés, notamment des joints toriques ou des joints spéciaux du type de ceux décrits dans le document WO2004/01269.

Ainsi, le cône 16 a pour rôle d'assurer l'étanchéité entre la seconde gaine polymérique 4 et la voûte d'extrémité 11.

Dans le mode de réalisation représenté à la Figure 4, un sertissage et une étanchéité sont réalisés entre l'extrémité libre 3a de la première gaine polymérique 3 et la canule 15. Ces fonctions sont obtenues par des moyens 20 de sertissage assurant une fonction d'étanchéité entre d'une part la première gaine 3 et d'autre part la canule 15. Ces moyens comprennent un cône 20 inséré entre l'extrémité libre 3a de ladite gaine polymérique 3 et la partie arrière 15b de la canule 15. Le cône 20 qui assure le sertissage de l'extrémité libre 3a de la première gaine polymérique 3 sur la carcasse interne 2 est maintenu en position par une bride 21 fixée sur la partie arrière 15b de la canule 15 par exemple par des organes de vissage 22.

Au cours de la circulation du fluide pétrolier à l'intérieur de la conduite 1, les gaz tels l'hydrogène sulfuré et/ou le dioxyde de carbone et/ou le méthane diffusent à travers la carcasse interne 2 et les gaines polymériques 3 et 4 et risquent de s'accumuler dans l'interstice 25 entre lesdites gaines polymériques. Cette accumulation de gaz peut entraîner une montée en pression au niveau de cet interstice 25 qui risque de provoquer un affaissement de la carcasse interne 2 lors d'une dépressurisation trop rapide de la conduite 1. En effet, si la dépressurisation est trop rapide, la pression à l'intérieur de la conduite 1 risque de chuter beaucoup plus rapidement que la pression au niveau de l'interstice 25 du fait de la difficulté à évacuer les gaz accumulés au niveau de l'interstice 25. Les phénomènes de perméation à travers les gaines étant très lents, l'essentiel de l'évacuation de ces gaz accumulés se fait axialement le long de l'interface et en direction des embouts. Lors de la décompression, du fait de la surpression au niveau de l'interstice 25, les deux gaines 3 et 4 ont tendance à se décoller de quelques dixièmes de millimètres en créant un jeu annulaire au niveau de leur interface, jeu le long duquel les gaz peuvent être évacués vers les embouts 10.

Afin de faciliter cette évacuation en réduisant les pertes de charge au niveau de l'embout 10, la canule 15 de l'embout de connexion 10 représenté à la Figure 4, comporte des moyens de drainage des gaz de l'interstice 25 entre les deux gaines polymériques 3 et 4 vers l'extérieur de la conduite tubulaire flexible 1.

Comme montré à la Figure 4, les moyens de drainage des gaz vers l'extérieur comprennent au moins un canal axial 30 ménagé dans l'épaisseur de la canule 15 et s'étendant entre un bord d'extrémité 15a de ladite canule 15 et une chambre interne 31 annulaire ménagée entre la canule 15, la voûte d'extrémité 11 et l'extrémité libre 4a de la seconde gaine polymérique 4. Ledit au moins un canal 15 débouche au niveau de l'interstice 25 entre les deux gaines polymériques, respectivement 3 et 4.

De préférence, les moyens de drainage des gaz vers l'extérieur comprennent plusieurs canaux axiaux 30 décalés les uns des autres dans la circonférence de la canule 15 et uniformément répartis sur cette circonférence.

La chambre annulaire 31 communique avec l'extérieur de la conduite tubulaire flexible 1 par un passage 32 traversant la voûte 11. Ce passage 32 comporte un orifice d'entrée 32a débouchant dans la chambre annulaire 31 et un orifice de sortie 32b débouchant à l'extérieur de la conduite 1.

Dans le mode de réalisation représenté à la Figure 5, une canule 35 est insérée dans l'interstice 25 entre les deux gaines polymériques 3 et 4. Pour cela, la canule 35 comporte une partie avant 35a en forme de coin interposée entre l'extrémité libre 3a de la seconde gaine polymérique 4 et la première gaine polymérique 3 et une partie arrière 35b s'étendant au-delà de l'extrémité libre 4a de la seconde gaine polymérique 4 et recouvrant la première gaine polymérique 3.

De façon identique au premier mode de réalisation représenté à la Figure 4, l'extrémité libre 4a de la seconde gaine polymérique 4 est maintenue sur la canule 35 par un cône 16 de sertissage et d'étanchéité bloqué en position par une bride 17, fixée sur la partie avant 11 a de la voûte 11 par des organes de vissage 19.

Dans ce mode de réalisation, la première gaine polymérique 3 n'est pas fixée sur la canule 35 par un cône de sertissage et d'étanchéité. La canule 35 est bloquée en position par des bagues 36 et 37 interposées entre la partie arrière 35b de la canule 35 et un rebord interne ménagé à l'intérieur de la voûte 11.

Afin d'éviter une accumulation de gaz dans l'interstice 25 entre les deux gaines polymériques 3 et 4, la canule 35 de l'embout de connexion 10 représenté à la Figure 5, comporte des moyens de drainage des gaz vers l'intérieur de la conduite tubulaire flexible 1. Ces moyens de drainage comprennent au moins un canal axial 38 ménagé dans l'épaisseur de la canule 35 et s'étendant entre les deux bords d'extrémité de ladite canule 35.

De préférence, les moyens de drainage des gaz vers l'intérieur comprennent plusieurs canaux axiaux 38 décalés les uns des autres dans la circonférence de la canule 35 et uniformément répartis sur cette circonférence.

Dans le mode de réalisation représenté à la Figure 5, la bague 36 comporte des orifices 36a permettant de véhiculer les gaz vers l'intérieur de la conduite 1.

Selon une autre variante, la canule 35 et la bague 36 sont pleines. Dans ce cas, les gaz se diffusent vers l'intérieur de la conduite flexible 1 par les interstices ménagés entre la canule 35, la première gaine polymérique 3 et la carcasse interne 2. Ces gaz ne peuvent pas s'écouler vers l'extérieur de la conduite 1 du fait du sertissage et de l'étanchéité réalisés par le coin 16 placé entre la voûte 11 et l'extrémité libre de la seconde gaine polymérique 4.

Dans le cas où la gaine de pression 5 est formée par les deux couches polymériques 3 et 4, la canule 15 ou 35 est également placée entre deux couches polymériques.

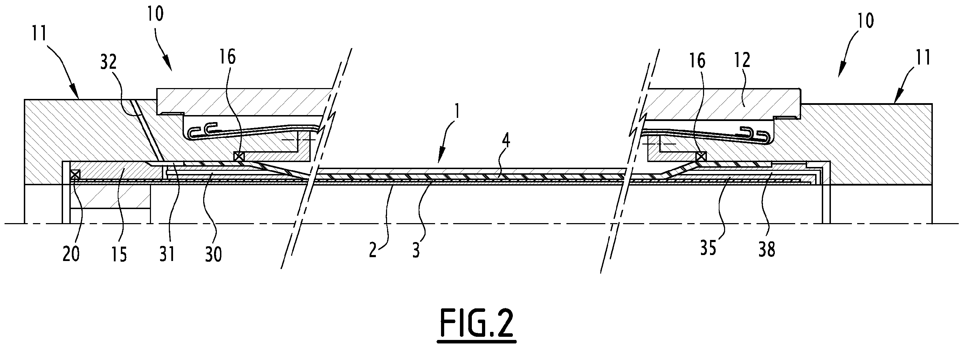

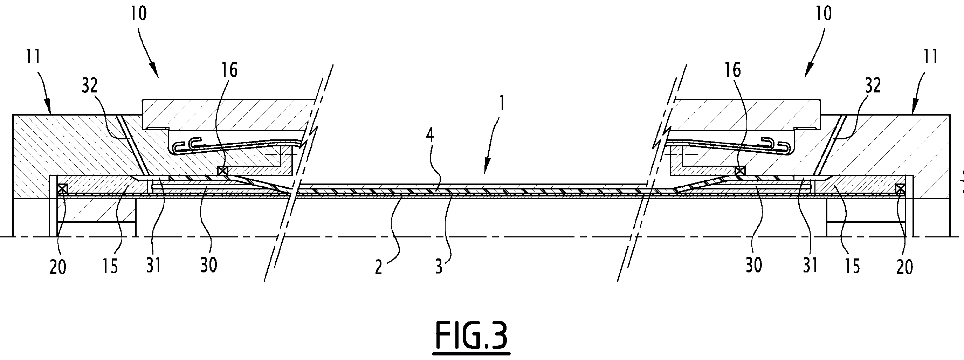

Ainsi que montré sur les Figures 2 et 3, la conduite tubulaire flexible 1 est munie à chacune de ses extrémités d'un embout de connexion 10.

Selon le mode de réalisation représenté à la Figure 2, la conduite 1 comprend, d'une part, un premier embout 10 comportant une canule 15 munie des canaux 30 de drainage des gaz de l'interstice 25 vers l'extérieur par l'intermédiaire du passage 32 et, d'autre part, d'un second embout 10 comportant une canule 35 munie des canaux 38 de drainage des gaz de l'interstice 25 vers l'intérieur de ladite conduite 1.

Selon le mode de réalisation représenté à la Figure 3, la conduite 10 comprend deux embouts de connexion 10 identiques comportant chacun une canule 15 munie des canaux 30 de drainage des gaz de l'interstice 25 vers l'extérieur de la conduite 1 par l'intermédiaire du passage 32.

Le drainage des gaz permet la purge continue de l'intercouche entre les gaines polymériques lors d'une montée en pression au niveau de cette intercouche par exemple au cours d'un arrêt de production.

L'orifice de sortie 32b du passage 32 peut être équipé d'une soupape différentielle de drainage du type de celle décrite dans le document WO 95/56045. Une telle soupape est destinée à s'ouvrir dès que la pression régnant dans la chambre annulaire 31 est supérieure à une certaine valeur.

L'orifice de sortie 32b du passage 32 peut aussi être connecté à un analyseur de gaz, de type connu, de manière à quantifier la composition gazeuse au niveau de l'interstice 25 entre les deux gaines polymériques 3 et 4 notamment en vue de déterminer ou non la présence des composés acides tels l'hydrogène sulfurée et/ou le dioxyde de carbone.

L'orifice de sortie 32b du passage 32 peut également être raccordé à un système connu de mesure de la pression différentielle des gaz entre cet orifice de sortie, c'est-à-dire la pression régnant au niveau de l'interstice 25 entre les gaines polymériques 3 et 4 et l'intérieur de la conduite 1.

L'orifice de sortie 32b du passage 32 peut en outre être raccordé à un système de mesure de débit des gaz et/ou à un capteur de mesure de la température des gaz.

Par exemple, ce système comprend deux capteurs de pression, non représentés, l'un mesurant la pression régnant au niveau de l'interstice 25 et l'autre mesurant la pression régnant à l'intérieur de la conduite 1. Les capteurs sont reliés à un dispositif, non représenté, d'enregistrement et de traitement en continu des mesures.

Le contrôle en continu et en temps réel de cette différence de pression permet donc de réduire fortement le risque de surpression inacceptable pouvant entraîner un affaissement de la carcasse interne de la conduite. En effet, lors d'une dépressurisation progressive de la conduite flexible 1, le dispositif permet de déclencher automatiquement et rapidement une alarme de façon à ralentir la vitesse de dépressurisation de cette conduite flexible 1 pour ramener la différence de pression entre d'une part l'interstice 25 et d'autre part l'intérieur de la conduite flexible à un niveau acceptable. Dès que la différence de pression revient à un niveau acceptable, la vitesse de dépressurisation à l'intérieur de la conduite flexible 1 peut être augmentée.

Généralement, le dispositif de mesure et/ou l'analyseur de gaz sont placés au niveau d'au moins un embout de connexion d'une extrémité des conduites flexibles, notamment au niveau de l'extrémité supérieure des conduites montantes (« riser ») assurant la liaison entre le fond marin et un support flottant à la surface.

Dans une variante, la gaine de pression 4 peut être surmontée d'une autre couche polymérique intermédiaire 9, par exemple une gaine anti-perméabiltié ou écran anti-$H_2S$, sertie au niveau des embouts 10 à chacune des extrémités de la conduite 1.

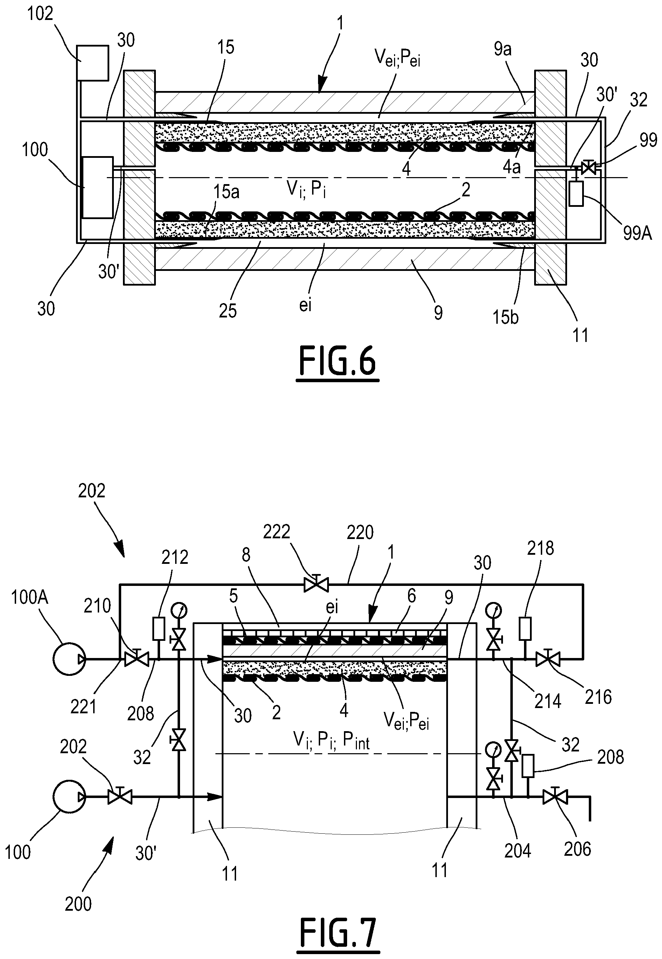

Selon une première méthode de test dont le montage est représenté en Figure 6, la structure de la conduite flexible 1 n'est visible que partiellement pour une meilleure compréhension de ladite méthode. La conduite 1 comporte une carcasse interne 2 sur laquelle est extrudée une gaine de pression 4. Autour de la gaine de pression 4 est extrudée une gaine anti-perméabilité 9. A chaque extrémité de la conduite 1, une canule 15 est partiellement insérée entre les extrémités libres 9a et 4a, respectives des deux gaines polymériques 9 et 4 comme décrit plus haut.

La canule 15 comporte une partie avant 15a en forme de coin placée entre l'extrémité libre 9a de la gaine polymérique intermédiaire 9 et la gaine de pression 4 et une partie arrière 15b recouvrant l'extrémité libre 4a de la gaine de pression 4. La canule 15 est maintenue dans cette position par la paroi interne de la voûte d'extrémité 11 de l'embout de connexion 10 (non représenté).

Pour réaliser le test « FAT » à l'une des deux extrémités de la conduite 1, le volume intérieur Vi, permettant le transport de fluides lorsque la conduite 1 est en fonctionnement, est relié à au moins un interstice 25 entre la gaine de pression 4 et la gaine anti-perméabilité 9 via au moins une des canules 15 qui définit au moins un canal axial 30 débouchant dans au moins un passage 32.

Le ou chaque passage 32 est relié à au moins un canal additionnel 30', traversant la voûte d'extrémité 11 et débouchant à l'intérieur de la conduite 1, au sein dudit volume intérieur $V_i$, sans passer par la canule 15.

Une vanne de contrôle 99 est interposée sur le canal axial additionnel 30' pour sélectivement ouvrir ou fermer le canal 30'.

Un capteur 99A de mesure de la pression dans le volume intérieur $V_i$ est piqué sur le canal 30' entre le volume intérieur $V_i$ et la vanne 99.

A l'autre extrémité de la conduite 1, le volume intérieur $V_i$ est raccordé via un autre canal additionnel 30' à un système de mise en pression 100 du volume intérieur $V_i$.

Le système 100 est par exemple une pompe volumétrique si le fluide utilisé pour la mise en pression est un liquide ou un compresseur si le fluide utilisé pour la mise en pression est un gaz.

Le canal axial additionnel 30' traverse la voûte d'extrémité 11 et débouche dans un volume intérieur $V_i$ sans passer par la canule 15. A cette même extrémité de la conduite, au moins un interstice 25 entre les gaines 4, 9 est raccordé, par l'intermédiaire d'au moins un second canal axial 30, à un système de mesure de pression 102.

Par exemple, le système 102 comprend une sonde de pression, mesurant la pression régnant au niveau de l'interstice 25. La sonde est reliée à un dispositif, non représenté, d'enregistrement et de traitement en continu des mesures.

Le second canal axial 30 traverse la canule 15 disposée à cette extrémité de la conduite 1.

Pour effectuer le test, la mise en route de la pompe volumétrique ou du compresseur du système 100 entraîne la mise en pression du volume intérieur $V_i$ de la conduite 1. Ceci crée un effort radial s'appliquant radialement vers l'extérieur sur l'ensemble de la structure de la conduite 1, et plus particulièrement sur la carcasse interne 2 et les gaines de pression 4 et gaine anti-perméabilité 9.

La gaine anti-perméabilité 9 soumise à cet effort radial subit une déformation plastique irréversible en fluant à l'intérieur des déjoints de la voûte de pression (non représentée). Lorsque le volume intérieur $V_i$ a atteint la pression de test $P_i$ ($P_i$ est par exemple au minimum 1,3 fois la pression de construction de la conduite testée que l'on s'est fixée), les zones restantes que l'on souhaite également tester sont mises sous pression via au moins une canule 15 jusqu'à ce que l'interstice 25 défini entre les deux gaines 4 et 9 ait atteint la pression de test $P_i$.

La mise en pression des zones restantes est réalisée grâce à l'ouverture de la vanne de contrôle 99 installée le long d'un canal axial additionnel 30'.

Le fluide présent dans le volume intérieur $V_i$ se déverse dans au moins un des passages 32, puis dans au moins un des second canaux 30 pour mettre en pression l'interstice 25.

Si l'on attend suffisamment longtemps, un espace intercouche ei définissant un volume $V_{ei}$ se crée entre la gaine de pression 4 et la gaine intermédiaire 9.

La pompe volumétrique est ensuite arrêtée lorsque la totalité de l'espace vide est à la pression de test déterminée avant le début du test « FAT », c'est-à-dire lorsque le volume intérieur $V_i$ et l'espace intercouche ei sont tous deux soumis à la pression de test $P_i$.

La suite du test comprend tout d'abord une phase de stabilisation d'au moins deux heures de la pression au sein de la conduite 1 pour vérifier l'équilibre en température et en pression du système, c'est-à-dire, vérifier que la pression reste sensiblement la même sur une courte période. A cet effet, une variation de 1% sur une période d'une heure est acceptable comme l'indique notamment la Norme API 17J paragraphe 10.3.1.3.

La suite du test comprend ensuite une phase de maintien de la conduite tubulaire 1 sous pression pendant une durée allant de quelques heures, par exemple durant au minimum 24 heures comme recommandé par la Norme API 17J paragraphe 10.3.1.5 à quelques jours.

Ensuite, on mesure régulièrement (par exemple toutes les 30 minutes suivant la Norme API 17J paragraphe 10.3.1.5) grâce aux capteurs de pression 99A, 102, le différentiel de pression pouvant exister entre le volume intérieur $V_i$ et l'espace intercouche ei. Pour ce faire, on mesure la pression $P_i$ au sein du volume intérieur $V_i$ et la pression $P_{ei}$ au sein de l'espace intercouche ei.

Si on mesure un différentiel de pression infime ou quasi-nul, c'est-à-dire si les fluctuations de pression observées sont inférieures ou égales à 4% de la pression de test fixée au préalable, cela signifie que le volume intérieur $V_i$ et l'espace intercouche ei sont soumis à la même pression. Les gaines 4 et 9 sont alors considérées comme parfaitement intègres.

A l'inverse, si le différentiel de pression mesuré par les capteurs de pression 99A, 102 est non nul ou varie de manière importante (variations de pression supérieures à 4% de la pression initiale de test) par rapport à ce qui est imposé par la Norme API 17J de janvier 2009 au paragraphe 10.3.2, cela signifie que l'étanchéité de la conduite 1 n'est pas totale. Ceci signifie qu'en au moins un point de la conduite 1 et plus particulièrement au niveau de la gaine de pression 4 ou de la gaine anti-perméabilité 9, il existe au moins un défaut ne permettant pas d'assurer une parfaite étanchéité de la conduite 1. Par conséquent, son acheminement et son installation sur site ne peuvent être approuvés favorablement.

Enfin, la conduite tubulaire flexible 1 est dépressurisée de manière contrôlée, c'est-à-dire que des consignes de vitesse de dépressurisation imposées par le fabricant sont respectées. Ici, la vitesse maximale de dépressurisation est fixée à 100 bar par heure pour une dépressurisation jusqu'à une pression comprise entre 5 et 20 bars.

Une telle mesure de précaution est souhaitable si l'on ne veut pas entraîner un effondrement de la carcasse interne 2 sur elle-même. La dépressurisation peut se faire soit en diminuant de manière contrôlée la pression régnant au sein du volume intérieur $V_i$ la vanne 99 étant ouverte, soit en diminuant la pression par des opérations de piquage au sein de l'espace intercouche ei. Préférentiellement, on procède à la dépressurisation de la conduite 1 par opérations de piquage au sein de l'espace intercouche ei.

Une seconde méthode de test est exposée en regard de la Figure 7. La structure de la conduite 1 n'est pas visible dans son intégralité et est décrite schématiquement. La structure de la conduite tubulaire 1 est identique à celle décrite précédemment sur la Figure 6.

Dans cette seconde méthode de test, le circuit 200 de mise en pression du volume intérieur $V_i$ et le circuit 202 de mise en pression de l'espace intercouche ei sont aptes à fonctionner indépendamment l'un de l'autre.

Les circuits 200, 202 restent avantageusement reliés entre eux par des passages 32 de dérivation situés de part et d'autre de la conduite 1.

Le circuit 200 de mise en pression du volume intérieur $V_i$ comporte un premier système 100 de mise en pression et un canal additionnel 30', muni d'une vanne de contrôle 202 disposée à une première extrémité de la conduite 1. Il comporte en outre un canal auxiliaire 204 de dépressurisation muni d'une vanne 206 de dépressurisation montée à une deuxième extrémité de la conduite 1.

Le canal additionnel 30' traverse la voûte d'extrémité 11 d'un premier embout de connexion 10 pour déboucher dans le volume intérieur $V_i$. Un premier passage de dérivation 32 est piqué sur le canal additionnel 30'. La vanne de contrôle 202 est interposée entre le système de mise sous pression 100 et le passage 32.

Le canal de dépressurisation 204 traverse la voûte d'extrémité 11 de l'embout opposé à l'embout dans lequel est ménagé le canal additionnel 30'. Il est muni d'un capteur de pression 208 disposé entre le volume intérieur $V_i$ et la vanne de dépressurisation 206. Un passage de dérivation 32 est piqué sur la conduite de dépressurisation 204 entre la vanne de contrôle 206 et la voûte d'extrémité 11.

Le circuit 202 de mise en pression de l'espace intercouche ei comporte un système de mise sous pression 100A distinct du système 100, un conduit amont 208 muni d'une vanne de commande 210, un premier canal axial 30 raccordé au conduit amont 208, le canal axial 30 traversant la canule 15 située dans un premier embout 10 de la conduite 1, et un capteur de pression 212 monté sur le conduit amont 208. Il comporte en outre un deuxième canal axial 30 présent dans la canule 15 d'un deuxième embout 10 de la conduite 1, un conduit aval 214 muni d'une vanne 216 et un deuxième capteur de pression 218 monté sur le conduit aval 214.

Le circuit 202 comporte en outre une conduite de recirculation 220 munie d'une vanne de contrôle 222 raccordant d'une part, un premier point 221 du conduit amont 208 situé entre le système de mise en pression 100A et la première vanne 210, et d'autre part, et la deuxième vanne 216, sans passer par la conduite 1.

La seconde méthode de test « FAT » comprend tout d'abord la mise en pression du volume intérieur $V_i$ de la conduite 1, par le biais du système 100 comportant une pompe volumétrique ou un compresseur, à une première pression $P_i$ de « FAT » déterminée au préalable.

La mise en pression du volume intérieur $V_i$ permet de vérifier l'étanchéité de la gaine de pression 4 le long de sa longueur courante mais également au niveau du sertissage de cette dernière dans les embouts 10.

Une fois la pression $P_i$ atteinte, on actionne la première vanne 202 et une seconde vanne 206 pour verrouiller le circuit de mise en pression du volume intérieur $V_i$, on attend que la pression au sein de la conduite 1 soit stabilisée (avantageusement suivant la Norme API 17J), puis on contrôle les variations de pression grâce au capteur de pression 208.

Ensuite, ledit volume intérieur $V_i$ est dépressurisé depuis la pression $P_i$ jusqu'à une pression intermédiaire $P_{int}$ strictement inférieure à $P_i$ grâce à l'actionnement de la vanne 206, afin que la mise en pression du volume de l'espace intercouche ei puisse être possible. Lors de cette étape, le volume intérieur $V_i$ et l'espace intercouche ei ne sont pas connectés ensemble.

La valeur de la pression $P_{int}$ est avantageusement choisie telle que :

$$P_{int} = P_i - (P_{collapse} - 20\%) = P_i - (P_c * 0.8)$$

La pression $P_{collapse}$ d'effondrement de la carcasse interne 2 est fonction de la géométrie de la conduite tubulaire 1 qui est soumise au test « FAT ».

On poursuit le test par un maintien en pression du volume intérieur $V_i$, à la pression $P_{int}$ en maintenant la vanne 206 fermée et on ouvre la vanne 210 pour permettre la mise en pression du volume de l'espace intercouche $V_{ei}$, par le biais du deuxième système 100A comprenant une seconde pompe volumétrique ou un second compresseur, à une pression $P_{ei}$, strictement supérieure à $P_{int}$ et au plus égale à $P_i$. Préférentiellement, $P_{ei}$ est choisi égal à $P_i$.

L'espace intercouche ei est raccordé au système 100A par le conduit amont 208 et par le canal axial 30 traversant la canule 15 percée ainsi que la voûte d'extrémité 11 de l'embout de connexion 10 (non représenté).

Chacune des extrémités de l'espace intercouche ei est reliée, par l'intermédiaire d'au moins une canule 15 et au moins un canal axial 30, à un capteur de mesure de pression 212, 218. Le capteur de pression 212, 218 permet de mesurer la progression de la pressurisation de l'espace intercouche ei. Le fluide sous pression est injecté à l'une des deux extrémités de la conduite 1, progresse sur l'ensemble de la longueur courante de la conduite entre les gaines polymériques 4, 9 jusqu'à atteindre l'autre extrémité qui est agencée en circuit ouvert. Dès lors que le fluide s'est écoulé jusqu'à l'extrémité opposée à celle qui a permis l'introduction dudit fluide, le capteur de pression 218 détecte une variation de pression.

Le circuit 202 de mise en pression de l'espace intercouche ei est alors fermé via la vanne 216 puis via la vanne 210. La pression qu'indique le capteur de pression 212, 218 doit normalement rester sensiblement stable et de valeur égale à la pression $P_i$.

Par suite, la pression tend à s'homogénéiser dans l'intégralité de l'espace intercouche ei. Comme expliqué ci-avant, suivant les recommandations mentionnées dans le document normatif API 17J, on respecte un temps de stabilisation et on contrôle les possibles fluctuations de pression au sein du volume intérieur $V_i$ et de l'espace intermédiaire ei afin de s'assurer que la conduite 1 est stable en pression.

Dès lors que la conduite 1 est jugée stable en pression, on la maintien sous pression et on mesure fréquemment le différentiel de pression entre la pression $P_i$ au sein du volume intérieur $V_i$ et la pression $P_{ei}$ au sein de l'espace intercouche ei. Cette étape permet de vérifier l'intégrité de l'étanchéité de l'espace intercouche ei ainsi que l'intégrité des sertissages de l'interstice 25, au niveau de l'extrémité de chacun des embouts. Le différentiel de pression mesuré est inférieur à la pression $P_{collapse}$ d'effondrement de la carcasse interne 2.

Enfin, on dépressurise la conduite tubulaire 1 en commençant par dépressuriser l'espace intercouche ei, puis le volume intérieur $V_i$. La manière dont on dépressurise la conduite est mise en oeuvre de sorte qu'elle permet d'éviter un risque d'effondrement de la carcasse interne 2.

## Revendications

1. Conduite tubulaire flexible (1) pour le transport d'un fluide pétrolier tel qu'un fluide polyphasique ou un gaz, ladite conduite (1) étant du type non lié et comportant, d'une part, notamment une première et une seconde gaines polymériques (3, 4), au moins une nappe d'armures de traction (6, 7) et une gaine d'étanchéité polymérique (8) et, d'autre part, à chacune de ses extrémités, un embout de connexion (10) comprenant, entre autres, une voûte d'extrémité (11) et une canule (15, 35) partiellement insérée entre les extrémités libres (3a, 4a) des deux gaines polymériques (3, 4) et coopérant avec des moyens (16) de sertissage assurant une fonction d'étanchéité entre d'une part l'extrémité libre (4a) de la seconde gaine (4) et d'autre part la voûte d'extrémité (11), où la canule (15) d'un premier embout de connexion (10) comporte des moyens (30, 31, 32) de drainage des gaz de l'interstice (25) entre les deux gaines (3, 4) vers l'extérieur de la conduite (1) **caractérisé en ce que** la canule (15; 35) du second embout de connexion (10) comporte des moyens (30, 31, 32 ; 38, 39) de drainage des gaz de l'interstice (25) entre les deux gaines (3, 4) vers l'extérieur ou vers l'intérieur de ladite conduite (1), **en ce que** la canule (15) comporte une partie avant (15a) en forme de coin placée entre l'extrémité libre (4a) de la seconde gaine polymérique (4) et la première gaine polymérique (3), et une partie arrière (15b) recouvrant l'extrémité libre (3a) de la première gaine polymérique (3).

2. Conduite tubulaire flexible (1) selon la revendication 1 **caractérisée en ce qu'**elle comporte une carcasse interne (2) située à l'intérieur des première et seconde gaines polymériques (3,4) et une voûte de pression (5) entre la seconde gaine polymérique (4) et ladite au moins une nappe d'armures (6, 7).

3. Conduite tubulaire flexible (1) selon la revendication 1 ou 2, **caractérisée en ce que** l'embout (10) muni de la canule (15) comportant les moyens (30, 31, 32) de drainage des gaz vers l'extérieur comprend des moyens (20) de sertissage assurant une fonction d'étanchéité entre d'une part la première gaine (3), et d'autre part la canule (15) correspondante.

4. Conduite tubulaire flexible (1) selon l'une quelconque des revendications 1 à 3, **caractérisée en ce que** les moyens de drainage des gaz vers l'extérieur comprennent au moins un canal axial (30) ménagé dans l'épaisseur de la canule (15) et s'étendant entre un bord d'extrémité de ladite canule (15) placé dans l'interstice (25) entre les deux gaines (3, 4) et une chambre interne (31) annulaire ménagée entre la canule (15), la voûte d'extrémité (11) et l'extrémité libre (4a) de la seconde gaine (4), avantageusement les moyens de drainage des gaz vers l'extérieur comprennent plusieurs canaux axiaux (30) décalés les uns des autres dans la circonférence de la canule (15) correspondante.

5. Conduite tubulaire flexible (1) selon la revendication 4, **caractérisée en ce que** la chambre annulaire (31) communique avec l'extérieur de la conduite (1) par un passage (32) traversant la voûte d'extrémité (11) et comportant un orifice d'entrée (32a) débouchant dans ladite chambre (31) et un orifice de sortie (32b) débouchant à l'extérieur de la conduite (1).

6. Conduite tubulaire flexible (1) selon la revendication 5, **caractérisée en ce que** l'orifice de sortie (32b) du passage (32) est équipé d'une soupape différentielle.

7. Conduite tubulaire flexible (1) selon la revendication 5 ou 6, **caractérisée en ce que** l'orifice de sortie (32b) du passage (32) est raccordé à un système de mesure de la pression différentielle des gaz entre cet orifice de sortie (32b) du passage (32) et l'intérieur de la conduite (1) et/ou à un système d'analyse des gaz et/ou à un système de mesure de la température des gaz et/ou du débit des gaz.

8. Conduite tubulaire flexible (1) selon la revendication 1, **caractérisée en ce que** les moyens de drainage des gaz vers l'intérieur de la conduite (1) comprennent au moins un canal axial (38) ménagé dans l'épaisseur de la canule (35) et s'étendant entre les deux bords d'extrémité de ladite canule (35), avantageusement les moyens de drainage des gaz vers l'intérieur de la conduite (1) comprennent plusieurs canaux axiaux (38) décalés les uns des autres dans la circonférence de la canule (35) correspondante.

9. Méthode de test d'étanchéité d'un espace intercouche (ei) d'une conduite tubulaire flexible (1) selon l'une quelconque des revendications 1 à 8, comprenant les étapes de :

   a) mise en pression d'un volume intérieur ($V_i$) de transport de fluide, à une première pression ($P_i$) ;
   b) stabilisation de la pression ($P_i$) dans le volume intérieur $V_i$ ;
   c) mesure de la pression ($P_{ei}$) au sein de l'espace intercouche (ei).

10. Méthode de test selon la revendication 9, **caractérisée en ce qu'**elle comporte après l'étape b), une étape $b_1$) de mise en communication fluidique du volume intérieur ($V_i$) avec l'espace intercouche (ei), puis une étape $b_2$) de mise en pression du volume intérieur ($V_i$) et de l'espace intercouche (ei), à la pression ($P_i$) fixée à l'étape a).

11. Méthode de test selon l'une quelconque des revendications 9 ou 10, **caractérisée en ce qu'**elle comprend après l'étape c), une étape de dépressurisation du volume intérieur ($V_i$), le volume intérieur ($V_i$) et l'espace intercouche (ei) étant reliés ensemble.

12. Méthode de test selon la revendication 11, **caractérisée en ce qu'**elle comprend, après l'étape c), une étape $e_1$) de dépressurisation de l'espace intercouche (ei) par ouverture d'au moins un piquage.

13. Méthode de test selon la revendication 9, **caractérisée en ce qu'**elle comprend entre l'étape b) et l'étape c), une étape d) de mesure de la pression ($P_i$) au sein du volume intérieur ($V_i$), et après l'étape d), une étape $d_2$) de dépressurisation du volume intérieur ($V_i$) à une pression intermédiaire ($P_{int}$) inférieure à la première pression ($P_i$).

14. Méthode de test selon la revendication 13, **caractérisée en ce qu'**elle comporte entre l'étape d) et l'étape c), une étape $f_2$) de mise en pression du volume de l'espace intercouche (ei) à une pression ($P_{ei}$) supérieure à la pression intermédiaire ($P_{int}$) et inférieure ou égale à la première pression ($P_i$) fixée à l'étape a), et **en ce qu'**elle comporte après l'étape c), une étape $g_2$) de dépressurisation de l'espace intercouche (ei), avantageusement suivie d'une dépressurisation du volume intérieur ($V_i$).

15. Méthode de test selon l'une quelconque des revendications 9 à 14, **caractérisée en ce que** le fluide utilisé pour la mise en pression d'au moins un des volumes de la conduite (1) est choisi parmi un gaz et un liquide.

**Patentansprüche**

1. Flexible röhrenförmige Leitung (1) für den Transport eines Erdölfluids, wie ein mehrphasiges Fluid oder ein Gas, wobei die Leitung (1) vom nicht verbundenen Typ ist und einerseits insbesondere eine erste und eine zweite Polymer-Umhüllung (3, 4), mindestens eine Zugarmierungsschicht (6, 7) und eine Polymer-Abdichtungsumhüllung (8) und andererseits, an jedem ihrer Enden, ein Anschlussstück (10) aufweist, das, unter anderem, eine Endwölbung (11) und eine Kanüle (15, 35) umfasst, die teilweise zwischen den freien Enden (3a, 4a) der zwei Polymer-Umhüllungen (3, 4) eingeführt ist und mit Klemmmitteln (16) zusammenwirkt, die eine Abdichtungsfunktion zwischen einerseits dem freien Ende (4a) der zweiten Umhüllung (4) und andererseits der Endwölbung (11) sicherstellen, wobei die Kanüle (15) eines ersten Anschlussstücks (10) Mittel (30, 31, 32) zum Ableiten der Gase aus dem Zwischenraum (25) zwischen den zwei Umhüllungen (3, 4) nach außerhalb der Leitung (1) aufweist, **dadurch gekennzeichnet, dass** die Kanüle (15; 35) des zweiten Anschlussstücks (10) Mittel (30, 31, 32; 38, 39) zum Ableiten der Gase aus dem Zwischenraum (25) zwischen den zwei Umhüllungen (3, 4) nach außerhalb oder nach innerhalb der Leitung (1) aufweist, dass die Kanüle (15) einen vorderen keilförmigen Teil (15a), der zwischen dem freien Ende (4a) der zweiten Polymer-Umhüllung (4) und der ersten Polymer-Umhüllung (3) platziert ist, und einen hinteren Teil (15b), der das freie Ende (3a) der ersten Polymer-Umhüllung (3) bedeckt, aufweist.

2. Flexible Leitung (1) nach Anspruch 1, **dadurch gekennzeichnet, dass** sie eine Innenkarkasse (2), die sich im Inneren der ersten und zweiten Polymer-Umhüllungen (3, 4) befindet, und eine Druckwölbung (5) zwischen der zweiten Polymer-Umhüllung (4) und der mindestens einen Armierungsschicht (6, 7) aufweist.

3. Flexible Leitung (1) nach Anspruch 1 oder 2, **dadurch gekennzeichnet, dass** das Anschlussstück (10), das mit der Kanüle (15) versehen ist, welche die Mittel (30, 31, 32) zum Ableiten der Gase nach außerhalb aufweist, Klemmmittel (20) umfasst, die eine Abdichtungsfunktion zwischen einerseits der ersten Umhüllung (3) und andererseits der entsprechenden Kanüle (15) sicherstellen.

4. Flexible Leitung (1) nach einem der Ansprüche 1 bis 3, **dadurch gekennzeichnet, dass** die Mittel zum Ableiten der Gase nach außerhalb mindestens einen axialen Kanal (30) umfassen, der in der Dicke der Kanüle (15) vorgesehen ist und sich zwischen einem Endrand der Kanüle (15), der in dem Zwischenraum (25) zwischen den zwei Umhüllungen (3, 4) platziert ist, und einer ringförmigen Innenkammer (31), die zwischen der Kanüle (15), der Endwölbung (11) und dem freien Ende (4a) der zweiten Umhüllung (4) vorgesehen ist, erstreckt, wobei die Mittel zum Ableiten der Gase nach außerhalb vorteilhafterweise mehrere axiale Kanäle (30) umfassen, die im Umfang der entsprechenden Kanüle (15) zueinander versetzt sind.

5. Flexible Leitung (1) nach Anspruch 4, **dadurch gekennzeichnet, dass** die ringförmige Kammer (31) mit außerhalb der Leitung (1) über einen Durchlass (32) kommuniziert, der die Endwölbung (11) durchquert und eine Einlassöffnung (32a) aufweist, die in der Kammer (31) ausmündet, und eine Auslassöffnung (32b) aufweist, die außerhalb der Leitung (1) ausmündet.

6. Flexible Leitung (1) nach Anspruch 5, **dadurch gekennzeichnet, dass** die Auslassöffnung (32b) des Durchlasses (32) mit einem Differentialventil versehen ist.

7. Flexible Leitung (1) nach Anspruch 5 oder 6, **dadurch gekennzeichnet, dass** die Auslassöffnung (32b) des Durchlasses (32) mit einem System zum Messen des Differentialdrucks der Gase zwischen dieser Auslassöffnung (32b) des Durchlasses (32) und dem Inneren der Leitung (1) und/oder mit einem System zum Analysieren der Gase und/oder mit einem System zum Messen der Temperatur der Gase und/oder der Durchflussmenge der Gase verbunden ist.

8. Flexible Leitung (1) nach Anspruch 1, **dadurch gekennzeichnet, dass** die Mittel zum Ableiten der Gase nach innerhalb der Leitung (1) mindestens einen axialen Kanal (38) umfassen, der in der Dicke der Kanüle (35) vorgesehen ist und sich zwischen den zwei Endrändern der Kanüle (35) erstreckt, wobei die Mittel zum Ableiten der Gase nach innerhalb der Leitung (1) vorteilhafterweise mehrere axiale Kanäle (38) umfassen, die im Umfang der entsprechenden Kanüle (35) zueinander versetzt sind.

9. Verfahren zum Prüfen der Dichtigkeit eines Zwischenschichtraums (ei) einer flexiblen Leitung (1) nach einem der Ansprüche 1 bis 8, umfassend die folgenden Schritte:

   a) Beaufschlagen eines Innenvolumens (V_i) zum Transport von Fluid mit einem ersten Druck (P_i);
   b) Stabilisieren des Drucks (P_i) in dem Innenvolumen (V_i);
   c) Messen des Drucks (P_ei) im Inneren des Zwischenschichtraums (ei).

10. Prüfverfahren nach Anspruch 9, **dadurch gekennzeichnet, dass** es nach Schritt b) einen Schritt b_1) umfasst, um das Innenvolumen (V_i) mit dem Zwischenschichtraum (ei) in Strömungsverbindung zu bringen, und anschließend einen Schritt b_2), um das Innenvolumen (V_i) und den Zwischenschichtraum (ei) unter den in Schritt a) festgelegten Druck (P_i) zu setzen.

11. Prüfverfahren nach einem der Ansprüche 9 oder 10, **dadurch gekennzeichnet, dass** es nach Schritt c) einen Schritt aufweist, um den Druck im Innenvolumen (V_i) abfallen zu lassen, wobei das Innenvolumen (V_i) und der Zwischenschichtraum (ei) miteinander verbunden sind.

12. Prüfverfahren nach Anspruch 11, **dadurch gekennzeichnet, dass** es nach Schritt c) einen Schritt e_1) umfasst, um den Druck im Zwischenschichtraum (ei) durch Öffnen mindestens eines Stutzens abfallen zu lassen.

13. Prüfverfahren nach Anspruch 9, **dadurch gekennzeichnet, dass** es zwischen dem Schritt b) und dem Schritt c) einen Schritt d) umfasst, um den Druck (P_i) im Inneren des Innenvolumens (V_i) zu messen, und nach dem Schritt d) einen Schritt d_2) umfasst, um den Druck im Innenvolumen (V_i) auf einen Zwischendruck (P_int) abfallen zu lassen, der niedriger als der erste Druck (P_i) ist.

14. Prüfverfahren nach Anspruch 13, **dadurch gekennzeichnet, dass** es zwischen dem Schritt d) und dem Schritt c) einen Schritt f_2) umfasst, um das Volumen des Zwischenschichtraum (ei) mit einem Druck (P_ei) zu beaufschlagen, der höher als der Zwischendruck (P_int) und niedriger oder gleich dem ersten in Schritt a) festgelegten Druck (P_i) ist, und dass es nach Schritt c) einen Schritt g_2) umfasst, um den Druck im Zwischenschichtraum (ei) abfallen zu lassen, vorteilhafterweise gefolgt von einem Druckabfall im Innenvolumen (V_i).

15. Prüfverfahren nach einem der Ansprüche 9 bis 14, **dadurch gekennzeichnet, dass** das Fluidum, das zum Beaufschlagen mindestens eines der Volumen der Leitung (1) mit Druck verwendet wird, aus einem Gas und einer Flüssigkeit ausgewählt ist.

**Claims**

1. A flexible tubular pipe (1) for transporting a petroleum fluid such as multiphase fluid or a gas, said pipe (1) being of the unbonded type and including notably first and second polymeric sheaths (3, 4), at least one tensile armor layer (6, 7) and a polymeric sealing sheath (8) on the one hand and at each of its ends, a connecting endpiece (10) on the other hand comprising, i.a., an end vault (11) and a tubular sleeve (15, 35) partly inserted between the free ends (3a, 4a) of the two polymeric sheaths (3, 4) and cooperating with crimping means (16) providing a sealing function between the free ends (4a) of the second sheath (4) on the one hand and the end vault (11) on the other hand, wherein the tubular sleeve (15) of a first connecting endpiece (10) includes means (30, 31, 32) for draining the gases from the gap (25) between both sheaths (3, 4) towards the outside of the pipe (1) **characterized in that** the tubular sleeve (15; 35) of the second connecting endpiece (10) includes means (30, 31, 32: 38, 39) for draining the gases from the gap (25) between both sheaths (3, 4) towards the outside or towards the inside of said pipe (1), **in that** the tubular sleeve (15) comprises a wedge-shaped front portion (15a), placed between the free end (4a) of the second polymeric sheath (4) and the first polymeric sheath (3), and a rear portion (15b) covering the free end (3a) of the first polymeric sheath (3).

2. The flexible tubular pipe (1) according to claim 1, **characterized in that** it includes an internal carcass (2) located inside the first and second polymeric sheath (3, 4) and a pressure vault (5) between the second polymeric sheath (4) and said at least one armor layer (6, 7).

3. The flexible tubular pipe (1) according to claims 1 or 2, **characterized in that** the endpiece (10) provided with the tubular sleeve (15) including means (30, 31, 32) for draining the gases towards the outside comprises crimping means (20) providing a sealing function between the first sheath (3) on the one hand and the corresponding tubular sleeve (15) on the other hand.

4. The flexible tubular pipe (1) according to any of claims 1 to 3, **characterized in that** the means for draining the gases towards the outside comprise at least one axial channel (30) made in the thickness of the tubular sleeve (15) and extending between an end edge of said tubular sleeve (15) placed in the gap (25) between both sheaths (3, 4) and an annular internal chamber (31) made between the tubular sleeve (15), the end vault (11) and the free end (4a) of the second sheath (4), advantageously, the means for draining the gases towards the outside comprise several axial channels (30) shifted relatively to each other in the circumference of the corresponding tubular sleeve (15).

5. The flexible tubular pipe (1) according to claim 4, **characterized in that** the annular chamber (31) communicates with the outside of the pipe (1) through a passage (32) crossing the end vault (11) and including an inlet orifice (32a) opening into said chamber (31) and an outlet orifice (32b) opening on the outside of the pipe (1).

6. The flexible tubular pipe (1) according to claim 5, **characterized in that** the outlet orifice (32b) of the passage (32) is equipped with a differential valve.

7. The flexible tubular pipe (1) according to claims 5 or 6, **characterized in that** the outlet orifice (32b) of the passage (32) is connected to a system for measuring the pressure difference of the gas between this outlet orifice (32b) of the passage (32) and the inside of the pipe (1) and/or to a gas analysis system, and/or to a system for measuring the temperature of the gases and/or the flow rate of the gases.

8. The flexible tubular pipe (1) according to claim 1, **characterized in that** the means for draining the gases towards the inside of the pipe (1) comprise at least one axial channel (38) made in the thickness of the tubular sleeve (35) and extending between both end edges of said tubular sleeve (35), advantageously the means for draining the gases towards the inside of the pipe (1) comprise several axial channels (38) shifted relatively to each other in the circumference of the corresponding tubular sleeve (35).

9. A method for testing the seal of an interlayer space (ei) of a flexible tubular pipe (1) according to any of claims 1 to 8, comprising the steps:

    a) pressurizing an inner volume space ($V_i$) for fluid transport, to a first pressure ($P_i$);
    b) stabilizing the pressure ($P_i$) in the inner volume space $V_i$;
    c) measuring the pressure ($P_{ei}$) within the interlayer space (ei).

10. The test method according to claim 9, **characterized in that** it includes after step b), a step $b_1$) for putting the inner volume space ($V_i$) in fluidic communication with the interlayer space (ei), and then a step $b_2$) for pressurizing the inner volume space ($V_i$) and the interlayer space (ei), to the pressure ($P_i$) set in step a).

11. The test method according to any of claims 9 or 10, **characterized in that** it comprises after step c), a step for depressurizing the inner volume space ($V_i$), with the inner volume space ($V_i$) and the interlayer space (ei) being connected together.

12. The test method according to claim 11, **characterized in that** it comprises, after step c), a step $e_1$) for depressurizing the interlayer space (ei) by opening at least one tapping.

**13.** The test method according to claim 9, **characterized in that** it comprises between step b) and step c), a step d) for measuring the pressure ($P_i$) within the inner volume space ($V_i$), and after step d), a step $d_2$) for depressurizing the inner space ($V_i$) to an intermediate pressure ($P_{int}$) below the first pressure ($P_i$)

**14.** The test method according to claim 13, **characterized in that** it includes between step d) and step c), a step $f_2$) for pressurizing the volume of the interlayer space (ei) to a pressure ($P_{ei}$) greater than the intermediate pressure ($P_{int}$) and less than or equal to the first pressure ($P_i$) set in step a), and **in that** it includes after step c), a step $g_2$) for depressurizing the interlayer space (ei), advantageously followed by a depressurization of the inner volume space ($V_i$).

**15.** The test method according to any of claims 9 to 14, **characterized in that** the fluid used for pressurizing at least one of the spaces of the conduit (1) is selected from a gas and a liquid.

<u>FIG.1</u>

EP 2 676 061 B1

**FIG.2**

10  11  16  32  1  4  10  11  16  32

20  15  31  30  2  3  30  31  15  20

**FIG.3**

FIG.4

EP 2 676 061 B1

<u>FIG.5</u>

## FIG.6

## FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2099952 A
- EP 844429 A
- WO 2009153451 A
- WO 200401269 A
- WO 9556045 A